# EUROPÄISCHE PATENTSCHRIFT

(11) **EP 0 831 569 B1**
(45) Veröffentlichungstag und Bekanntmachung des Hinweises auf die Patenterteilung: **28.11.2001**
(21) Anmeldenummer: 97115557.7
(22) Anmeldetag: 08.09.1997
(51) Int. Cl.: H02B 1/26

(54) **Hilfsschalter**
Auxiliary switch
Interrupteur auxiliaire

(30) Priorität: 18.09.1996 DE 19638144
(43) Veröffentlichungstag der Anmeldung: 25.03.1998
(73) Patentinhaber: SIEMENS AKTIENGESELLSCHAFT, 80333 München (DE)
(72) Erfinder: Kaiser, Michael, Dipl.-Ing., (FH), 92245 Kümmersbruck (DE)

(56) Entgegenhaltungen:
- EP-A- 0 626 712
- DE-U- 8 611 138
- DE-U- 9 114 742
- US-A- 5 296 663

## Beschreibung

Die Erfindung bezieht sich auf einen Hilfsschalter mit einem Gehäuse mit den Merkmalen des Oberbegriffes des Anspruchs 1.

Die DE 86 11 138 U offenbart einen Hilfsschalter mit einem Gehäuse, mit einer ersten und einer zweiten Seitenwand, die sich zueinander weitgehend parallel erstrecken und mit diese verbindenden schmalen Seitenwänden, wobei aus der ersten Seitenwand ein Betätigungsnippel herausragt. Dieser dient zur Ankopplung an ein bewegliches Schaltorgan eines weiteren Hilfsschalters oder elektromagnetischen Schaltgeräts, wobei aus der ersten Seitenwand zwei Schnapphaken hervorragen, die mit an gegenüberliegenden schmalen dritten Seitenwänden liegenden Druckstücken in Verbindung stehen, wobei die Schnapphaken zum Eingriff in Ausnehmungen einer Gehäusewand eines weiteren Hilfsschalters oder Schaltgeräts dienen und die Druckstücke zum Lösen eines solchen Eingriffs betätigbar sind.

In der EP 0 505 796 A1 ist eine Anordnung zum lösbaren Verbinden Seite an Seite von Hilfsschaltern untereinander und/oder mit einem elektromagnetischen Schaltgerät offenbart. An den miteinander zu verbindenden Seiten der Gehäuse sind hier zugeordnete Führungsstege und Nuten für eine Schwalbenschwanz-Verbindung ausgebildet, so daß nach Eintauchen des Betätigungsnippels eines Hilfsschalters in eine Ausnehmung eines zu verbindenden Gehäuses die Führungsstege durch Verschieben der miteinander zu verbindenden Gehäuse parallel zu ihren Verbindungsseiten in die Nuten einführbar und bis zum Erreichen der Position des Eingriffs des Betätigungsnippels mit dem Schaltorgan verschiebbar sind.

Aus der EP-OS 0 223 622 ist eine Ausbildung von Hilfsschaltern zum Verbinden untereinander Seite an Seite mittels scharnierartiger Rastmittel und einer zusätzlichen federnden die beiden Hilfsschalter übergreifenden Sperrklinke bekannt. Diese Verbindung kann ebenso wie die vorher beschriebene nur durch eine Bewegung senkrecht auf die seitliche Anbauwand zu, ggf. als Drehbewegung, hergestellt werden und benötigt daher einen erheblichen Montageraum.

Der Erfindung liegt die Aufgabe zugrunde, eine montagefreundliche Verbindung von Hilfsschaltern und Schaltgeräten für seitlichen Anbau zu schaffen, die wenig Montageraum beansprucht, Schraubverbindungen vermeidet und ein Ankoppeln und Lösen ohne Werkzeug ermöglicht.

Die Aufgabe wird durch die Merkmale nach Anspruch 1 gelöst.

Dadurch, daß der Schnapphaken mit dem Druckstück über ein Verbindungsstück verbunden ist und das Verbindungsstück derart ausgebildet ist, daß es zumindest im Bereich, der dem Druckstück benachbart ist, im aufgeschnappten Zustand an die Gehäusewand des angekoppelten Hilfsschalters oder elektromagnetischen Schaltgeräts andrückt, wird der Lösung der Schnappverbindung entgegenwirkt. Abhängig von der mehr oder weniger starken Ausbildung des Verbindungsstücks und seiner federnden Eigenschaften kann damit die Haltekraft des Schnapphakens auf einfache Weise variiert werden.

Außerdem ist es vorteilhaft, wenn der Schnapphaken in zwei Schenkeln ausläuft, die eine Öffnung zum Eingriff eines Schnapphakens eines weiteren Hilfsschalters bilden, der an die zweite Seitenwand ankoppelbar ist. Dies bedeutet, daß auf diese Weise mehrere Hilfsschalter Seite an Seite miteinander durch Schnapphaken aneinander befestigt werden können.

Das aus dem Schnapphaken, dem Verbindungsstück und dem Druckstück bestehende Verbindungsorgan ist vorteilhafterweise im Bereich des Zugangs zu einer Klemmenanschlußschraube des Hilfsschalters untergebracht. Dabei ist es besonders vorteilhaft, wenn der Schnapphaken, das Verbindungsstück und das Druckstück einen Freiraum bilden, durch den eine Klemmenanschlußschraube des Hilfsschalters mit einem Werkzeug zugänglich ist. Auf diese Weise wird die Funktion und Ausgestaltung des Hilfsschalters nicht beeinträchtigt, da der Einbau des Verbindungsorgans in einem ohnehin frei verfügbaren Raum stattfindet.

Außerdem wird bei Betätigung der Druckstücke im aufgeschnappten Zustand der Schnapphaken über das Verbindungsstück in die entriegelte Position gedrückt, wobei die Betätigungskraft in eine vom Verbindungsstück auf die Gehäusewand wirkende Kraft umgelenkt wird, wodurch der Hilfsschalter von der Gehäusewand weggedrückt wird.

Eine Ausführungsform der Erfindung wird im folgenden anhand einer Zeichnung näher erläutert. Es zeigen:
- FIG 1: Einen erfindungsgemäßen Hilfsschalter in perspektivischer Ansicht,
- FIG 2: eine erste Schnittansicht des Hilfsschalters gemäß FIG 1 im aufgeschnappten Zustand,
- FIG 3: eine zweite Schnittansicht des Hilfsschalters gemäß FIG 1 im aufgeschnappten Zustand und
- FIG 4: zwei Schnapphaken des Hilfsschalters gemäß FIG 1 im Längsschnitt.

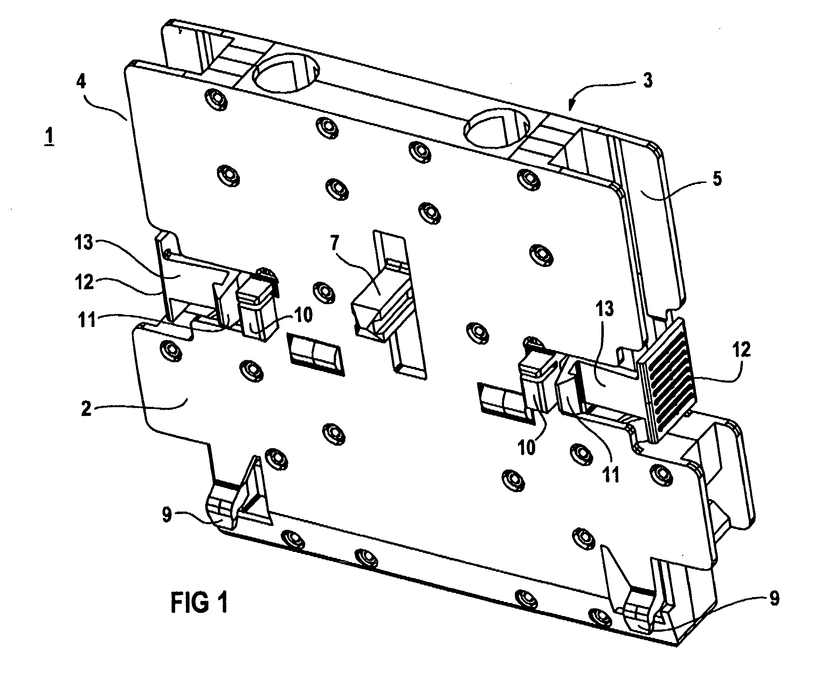

In FIG 1 ist ein Hilfsschalter 1 in perspektivischer Ansicht dargestellt. Er kann an ein nichtdargestelltes elektromagnetisches Schaltgerät oder einen weiteren Hilfsschalter derselben Bauart angekoppelt werden. Das Gehäuse des Hilfsschalters 1 ist im wesentlichen aus einer ersten 2 und einer zweiten Seitenwand 3 und diese verbindenden schmalen dritten Seiten wänden 4 und 5 zusammengesetzt. Die erste 2 und die zweite Seitenwand 3 erstrecken sich zueinander zumindest weitgehend parallel. Aus der ersten Seitenwand 2 ragt ein Betätigungsnippel 7 heraus, der zur Ankopplung an ein bewegliches Schaltorgan eines weiteren Hilfsschalters oder elektromagnetischen Schaltgeräts dient. Über den Betätigungsnippel 7 sind im Innenraum des Hilfsschalters 1 liegende Hilfskontakte schaltbar. Die Hilfskontakte weisen Festkontakte auf, an die elektrische Leiter über Leitungszuführöffnungen in den schmalen Seitenwänden 4 und 5 anschließbar sind. Die zugehörigen Klemmenanschlußschrauben sind von oben her, z.B. mittels eines Schraubendrehers, zugänglich. An der Oberseite des Hilfsschalters 1 gemäß FIG 1 sind entsprechende Bohrungen sichtbar. Der Hilfsschalter 1 ist über seine erste Seitenwand 2 in eine hier nicht dargestellte Gehäusewand eines anderen Hilfsschalters oder elektrischen Schaltgeräts ankoppelbar. Hierzu sind an der Seitenwand im unteren Bereich Ansetzhaken 9 sowie im mittleren Bereich Zapfen 10 vorgesehen. Weiterhin ragen aus der ersten Seitenwand 2 zwei Schnapphaken 11 heraus. Diese stehen mit an den schmalen Seitenwänden 4 und 5 liegenden Druckstücken 12 in Verbindung. Die Schnapphaken 11 greifen in Ausnehmungen einer Gehäusewand des weiteren Hilfsschalters oder Schaltgeräts ein. Zum Lösen eines solchen Eingriffs werden die Druckstücke 12 betätigt. Die Schnapphaken 11 sind mit den zugehörigen Druckstücken 12 jeweils über ein Verbindungsstück 13 verbunden. Das Verbindungsstück 13 ist derart ausgebildet, daß es zumindest im Bereich, der dem Druckstück 12 benachbart ist, im aufgeschnappten Zustand an die Gehäusewand des angekoppelten Hilfsschalters oder elektrischen Schaltgeräts andrückt, wodurch einer Lösung der Schnappverbindung entgegengewirkt wird.

Die Ankopplung des Hilfsschalters 1 erfolgt, indem zunächst die Ansetzhaken 9 mit Öffnungen in der Gehäusewand des elektrischen Schaltgeräts oder Hilfsschalters in Eingriff gebracht werden. Dabei sind die oberen Partien des Hilfsschalters 1 durch Schrägstellen zu der Gehäusewand beabstandet. Beim Heranschwenken greifen die zur Fixierung dienenden Zapfen 10 in entsprechende Öffnungen der Gehäusewand und richten den Hilfsschalter 1 dabei zur Gehäusewand des elektrischen Schaltgeräts bzw. des Hilfsschalters aus. Schließlich greifen die Schnapphaken 11 am elektrischen Schaltgerät ein. Sie verschnappen und befestigen so den Hilfsschalter im oberen Bereich. Zum Lösen der Verschnappung genügt es, z.B. mit dem Daumen und Zeigefinger einer Hand die Druckstücke 12 zusammenzudrücken. Dabei wird der Hilfsschalter 1 von der Gehäusewand des elektrischen Schaltgeräts bzw. Hilfsschalters über die Verbindungsstücke 13 abgedrückt und dadurch gelöst.

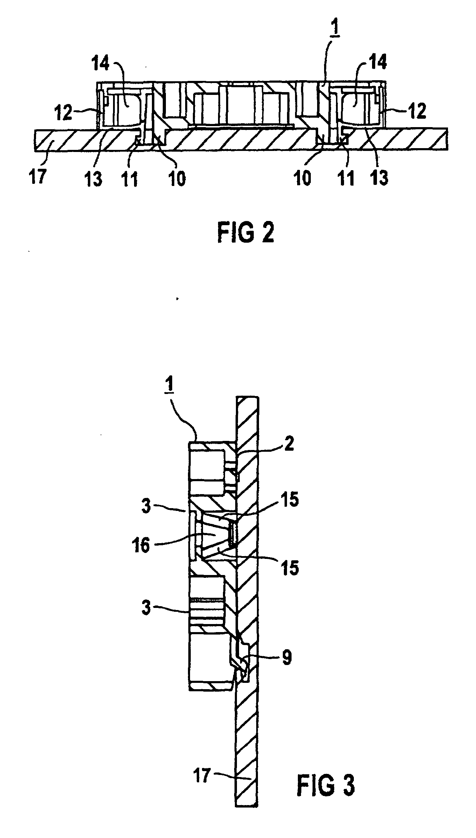

FIG 2 zeigt eine Schnittansicht des Hilfsschalters 1 im eingebauten, d.h. verschnappten Zustand an einer Gehäusewand 17. Hier ist deutlich der Eingriff der Schnapphaken 11 in Öffnungen der Gehäusewand 17 zu erkennen. Die Schnapphaken 11 sind über das Verbindungsstück 13 jeweils mit einem Druckstück 12 verbunden, die von den Außenseiten des Hilfsschalters 1 her betätigbar sind. Der Schnapphaken 11 bildet jeweils mit dem Druckstück 12 und dem Verbindungsstück 13 einen Freiraum 14, durch den eine hier nicht dargestellte KlemmenAnschlußschraube des Hilfsschalters 1, z.B. mit einem Schraubendreher, zugänglich ist.

In FIG 3 ist eine weitere Schnittansicht des an eine Gehäusewand 17 angekoppelten Hilfsschalters 1 gezeigt. Hieraus ist ersichtlich, daß der Schnapphaken 11 in zwei Schenkeln 15 ausläuft, die eine Öffnung 16 zum Eingriff eines Schnapphakens eines weiteren, an die zweite Seitenwand 3 ankoppelbaren Hilfsschalters bilden.

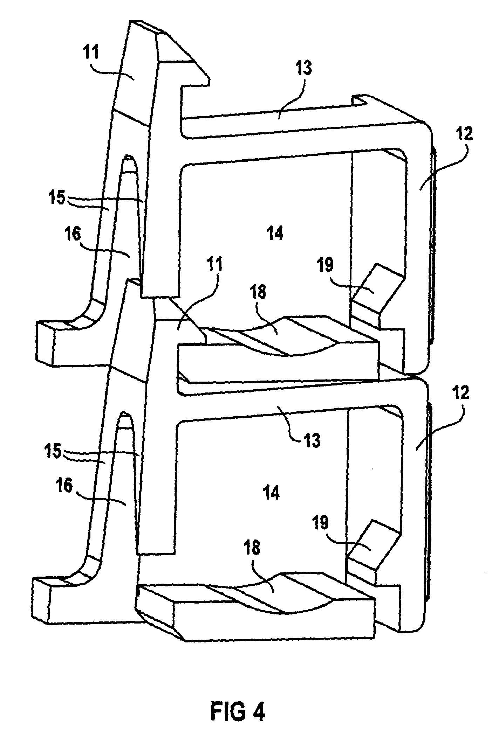

FIG 4 zeigt zwei der zuvor teilweise beschriebenen Verbindungsorgane von Hilfsschaltern mit jeweils einem Schnapphaken 11, einem dazugehörigen Verbindungsstück 13 und einem sich diesem anschließenden Druckstück 12. Die Verbindungsorgane haben einen rahmenartigen Aufbau mit dem genannten Freiraum 14, wobei in Verlängerung der Schnapphaken 11 sich jeweils zwei Schenkel 15 erstrecken. Durch diese wird die Öffnung 16 gebildet, in der der Schnapphaken 11 eines Verbindungsorgans eines weiteren Hilfsschalters zur Befestigung eingreifen kann (s. FIG 3). Dem Verbindungsstück 13 liegt jeweils ein Steg 18 gegenüber, an dem das Druckstück 12 bei der Betätigung zur Anlage kommt. Mittels eines Vorsprungs 19 am Druckstück 12 wird verhindert, daß dieses in der Figur nach unten weggedrückt werden kann. Durch die federnde Ausgestaltung mit den beiden Schenkeln 15 ist gewährleistet, daß der Schnapphaken 11 bei Betätigung des Druckstücks 12 über die Schenkel 15 zur Seite federt, wobei das in Verbindung stehende Verbindungsstück 13 zusammen mit dem Druckstück 12 in der Figur nach oben ausgelenkt wird. Dies hat zur Folge, daß bei Betätigung der Druckstücke 12 im aufgeschnappten Zustand des Hilfsschalters 1 der Schnapphaken 11 über das Verbindungsstück 13 in die entriegelte Position gedrückt wird, wobei die Betätigungskraft zugleich in eine von dem Verbindungsstück 13 auf die Gehäusewand wirkende Kraft umgelenkt wird. Dabei löst sich automatisch der Hilfsschalter von der Gehäusewand des elektrischen Schaltgeräts oder Hilfsschalters. Die beiden Druckstücke 12 liegen in einem solchen Abstand voneinander, daß sie mit einer Hand zugleich betätigbar sind.

Obwohl die vorliegende Erfindung unter Bezugnahme auf die in der beigefügten Zeichnung dargestellte Ausführungsform erläutert ist, sollte berücksichtigt werden, daß damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Hilfsschalter (1) mit einem Gehäuse, mit einer ersten (2) und einer zweiten (3) Seitenwand, die sich zueinander weitgehend parallel erstrecken und mit diese verbindenden schmalen Seitenwänden (4,5), wobei aus der ersten Seitenwand (2) ein Betätigungsnippel (7) herausragt, der zur Ankopplung an ein bewegliches Schaltorgan eines weiteren Hilfsschalters oder elektromagnetischen Schaltgeräts dient, und aus der ersten Seitenwand (2) zwei Schnapphaken (11) hervorragen, die mit an gegenüberliegenden schmalen dritten Seitenwänden (4,5) liegenden Druckstücken (12) in Verbindung stehen, wobei die Schnapphaken (11) zum Eingriff in Ausnehmungen einer Gehäusewand eines weiteren Hilfsschalters oder Schaltgeräts dienen und die Druckstücke (12) zum Lösen eines solchen Eingriffs betätigbar sind, **dadurch gekennzeichnet,**
**daß** der Schnapphaken (11) mit dem Druckstück (12) über ein Verbindungsstück (13) verbunden ist, und daß das Verbindungsstück (13) derart ausgebildet ist, daß es zumindest im Bereich, der dem Druckstück (12) benachbart ist, im aufgeschnappten Zustand an eine Gehäusewand (17) des angekoppelten Hilfsschalters oder elektromagnetischen Schaltgeräts andrückt ist, wobei dies der Lösung der Schnappverbindung entgegenwirkt und daß bei Betätigung der Druckstücke (12) im aufgeschnappten Zustand der Schnapphaken (11) über das Verbindungsstück (13) in die entriegelte Position gedrückt wird, wobei die Betätigungskraft zugleich in eine vom Verbindungsstück (13) auf die Gehäusewand (17) wirkende Kraft umgelenkt wird.

2. Hilfsschalter nach Anspruch 1,
**dadurch gekennzeichnet, daß** der Schnapphaken (11) in zwei Schenkeln (15) ausläuft, die eine Öffnung (16) zum Eingriff eines Schnapphakens (11) eines weiteren Hilfsschalters (1) bilden, der an die zweite Seitenwand (3) ankoppelbar ist.

3. Hilfsschalter nach Anspruch 1 oder 2,
**dadurch gekennzeichnet, daß** der Schnapphaken (11), das Verbindungsstück (13) und das Druckstück (12) einen Freiraum (14) bilden, durch den eine Klemmenanschlußschraube des Hilfsschalters mit einem Werkzeug zugänglich ist.

4. Hilfsschalter nach einem der vorangehenden Ansprüche,
**dadurch gekennzeichnet, daß** die beiden Druckstücke (12) in einem solchen Abstand voneinander liegen, daß sie mit einer Hand zugleich betätigbar sind.

## Claims

1. Auxiliary switch (1) with a housing, with a first (2) and a second (3) side wall which extend largely parallel to each other and with narrow side walls (4,5) which join them together, whereby an activating nipple (7) which serves for connecting to a movable switching organ or another auxiliary switch or electromagnetic switchgear projects from the first side wall (2), and two snap hooks (11), which are in contact with the pressure pieces (12) situated at the opposite, narrow, third side walls (4,5), project from the first side wall (2), whereby the snap hooks (11) serve to engage in recesses of a housing wall of another auxiliary switch or switchgear and the pressure pieces (12) are capable of being actuated for releasing such an engagement, **characterised in that** the snap hook (11) is connected to the pressure piece (12) through a connecting piece (13) and that the connecting piece (13) is configured such that at least in the area adjacent to the pressure piece (12), in snapped condition it presses against a housing wall (17) of the coupled auxiliary switch or electromagnetic switchgear, with this acting against the release of the snap connection, and that upon actuation of the pressure pieces (12) in snapped condition, the snap hook (11) is pressed by means of the connecting piece (13) into the unlatched position, with the actuation force at the same time being redirected into a force acting from the connecting piece (13) onto the housing wall (17).

2. Auxiliary switch according to Claim 1, **characterised in that** the snap hook (11) tapers into two shanks (15) which form an opening (16) for grasping a snap hook (11) of another auxiliary switch (1) which can be coupled to the second side wall (3).

3. Auxiliary switch according to Claim 1 or 2, **characterised in that** the snap hook (11), the connecting piece (13), and the pressure piece (12) form a free space (14) through which a terminal connecting screw of the auxiliary switch can be accessed with a tool.

4. Auxiliary switch according to one of the preceding claims, **characterised in that** the two pressure pieces (12) are situated at such a distance from each other that they can be actuated at the same time by one hand.

## Revendications

1. Interrupteur auxiliaire (1) comprenant un boîtier, présentant une première (2) et une seconde (3) paroi latérale qui, dans une large mesure, s'étendent parallèlement l'une à l'autre, et sont reliées par des parois latérales étroites (4, 5), un embout d'actionnement (7) qui fait saillie de la première paroi latérale (2), servant au couplage à un organe de commande mobile d'un autre interrupteur auxiliaire ou appareil de commutation électromagnétique, et deux crochets d'encliquetage (11) qui font saillie de la première paroi latérale (2), étant en liaison avec des pièces formant poussoir (12) situées sur des troisièmes parois latérales étroites (4, 5) opposées, les crochets d'encliquetage (11) servant à venir en prise dans des évidements d'une paroi de boîtier d'un autre interrupteur auxiliaire ou appareil de commutation, et les pièces formant poussoir (12) étant susceptibles d'être actionnées pour interrompre une telle prise réciproque, **caractérisé en ce que** le crochet d'encliquetage (11) est relié à la pièce formant poussoir (12), par l'intermédiaire d'une pièce de liaison (13), et **en ce que** la pièce de liaison (13) est conçue de manière telle, que dans la position encliquetée, elle soit pressée, au moins dans la zone qui est voisine de la pièce formant poussoir (12), contre une paroi de boîtier (17) de l'interrupteur auxiliaire ou de l'appareil de commutation électromagnétique couplé, ceci s'opposant à l'interruption de la liaison par encliquetage, et **en ce qu'**en cas d'actionnement des pièces formant poussoir (12), dans l'état encliqueté, le crochet d'encliquetage (11) est poussé dans la position déverrouillée, la force d'actionnement subissant en même temps un renvoi engendrant une force agissant de la pièce de liaison (13) sur la paroi de boîtier (17).

2. Interrupteur ou commutateur auxiliaire selon la revendication 1, **caractérisé en ce que** le crochet d'encliquetage (11) se termine par deux branches (15) qui forment une ouverture (16) dans laquelle peut venir en prise un crochet d'encliquetage (11) d'un autre interrupteur auxiliaire (1) qui peut être couplé à la seconde paroi latérale (3).

3. Interrupteur ou commutateur auxiliaire selon la revendication 1 ou 2, **caractérisé en ce que** le crochet d'encliquetage (11), la pièce de liaison (13) et la pièce formant poussoir (12) forment un espace libre (14) permettant l'accès à une vis de borne de connexion de l'interrupteur auxiliaire, à l'aide d'un outil.

4. Interrupteur ou commutateur auxiliaire selon l'une des revendications précédentes, **caractérisé en ce que** les deux pièces formant poussoir (12) se situent à une distance telle l'une de l'autre, qu'elles puissent être actionnées simultanément d'une seule main.
